# EUROPÄISCHE PATENTSCHRIFT

(11) **EP 1 649 147 B1**
(45) Veröffentlichungstag und Bekanntmachung des Hinweises auf die Patenterteilung: **16.09.2009**
(21) Anmeldenummer: 04740755.6
(22) Anmeldetag: 07.07.2004
(51) Int. Cl.: F01K 25/06

(54) **VERFAHREN UND VORRICHTUNG ZUR AUSFÜHRUNG EINES THERMODYNAMISCHEN KREISPROZESSES**
METHOD AND DEVICE FOR CARRYING OUT A THERMODYNAMIC CYCLE
PROCEDE ET DISPOSITIF POUR EFFECTUER UN CYCLE THERMODYNAMIQUE

(30) Priorität: 31.07.2003 DE 10335134
(43) Veröffentlichungstag der Anmeldung: 26.04.2006
(73) Patentinhaber: SIEMENS AKTIENGESELLSCHAFT, 80333 München (DE)
(72) Erfinder: BÖTTGER, Matthias, 10707 Berlin (DE); LENGERT, Jörg, 91475 Lonnerstadt-Ailsbach (DE)
(86) Internationale Anmeldenummer: PCT/EP2004/007443
(87) Internationale Veröffentlichungsnummer: WO 2005/014981

(56) Entgegenhaltungen:
- EP-A- 0 378 428
- EP-A- 0 472 020
- EP-A- 0 952 316
- DE-A- 10 052 414
- US-B1- 6 604 364
- GAJEWSKI W ET AL: "DER KALINA-PROZESS" VGB KRAFTWERKSTECHNIK, VGB KRAFTWERKSTECHNIK GMBH. ESSEN, DE, Bd. 69, Nr. 5, 1. Mai 1989 (1989-05-01), Seiten 477-483, XP000028691 ISSN: 0372-5715

## Beschreibung

Die Erfindung bezieht sich auf ein Verfahren und eine Vorrichtung zur Ausführung eines thermodynamischen Kreisprozesses gemäß Patentanspruch 1 bzw. Patentanspruch 4.

Wärmekraftwerke nutzen thermodynamische Kreisprozesse zur Umwandlung von Wärme in mechanische bzw. elektrische Energie. Konventionelle Wärmekraftwerke erzeugen die Wärme durch die Verbrennung von Brennstoffen, vor allem den fossilen Energieträgern Kohle, Öl und Gas. Die Kreisprozesse werden hierbei z.B. auf Basis des klassischen Rankine-Kreisprozesses mit Wasser als Arbeitsmittel betrieben. Sein hoher Siedepunkt macht Wasser allerdings vor allem bei der Nutzung von Wärmequellen mit Temperaturen zwischen 100° bis 200 °C, z.B. geothermische Flüssigkeiten oder Abwärme aus Verbrennungsprozessen, aufgrund mangelnder Wirtschaftlichkeit unattraktiv.

Für Wärmequellen mit solch niedriger Temperatur wurden in den letzten Jahren verschiedenste Technologien entwickelt, die es ermöglichen, deren Wärme mit gutem Wirkungsgrad in mechanische bzw. elektrische Energie umzuwandeln. Neben dem Rankine-Prozess mit organischem Arbeitsmittel (organic rankine cycle, ORC) zeichnet sich vor allem der sogenannte Kalina-Kreisprozess durch deutlich bessere Wirkungsgrade gegenüber dem klassischen Rankine-Prozess aus. Auf der Basis des Kalina-Kreisprozesses wurden diverse Kreisläufe für unterschiedlichste Anwendungen entwickelt. Diese Kreisläufe verwenden als Arbeitsmittel anstatt Wasser ein Zweistoffgemisch(z.B. Ammoniak und Wasser), wobei der nicht-isotherme Siede- und Kondensationsvorgang des Gemisches ausgenutzt wird, um den Wirkungsgrad des Kreislaufs im Vergleich zu dem Rankine-Kreislauf zu erhöhen.

Für Temperaturen der Wärmequelle von mindestens 140 °C wird bevorzugt der Kalina-Kreislauf KCS 11 (Kalina Cycle System 11) verwendet.Hierbei wird ein flüssiges Arbeitsmittel in einen Wärmetauscher, im folgenden "Vorerwärmungs-Wärmetauscher" genannt, gepumpt, wo es durch eine Teilkondensation eines entspannten Arbeitsmittelstromes bis zum Siedepunkt erhitzt wird. Der druckbeaufschlagte, siedende Arbeitsmittelstrom wird danach durch einen Teiler in einen ersten und zweiten Teilstrom aufgeteilt. Der erste Teilstrom wird in einem ersten, weiteren Wärmetauscher unter Verwendung von Wärme, die durch Abkühlung einer Wärmequelle (z.B. einer geothermischen Flüssigkeit) erzeugt wird, teilweise verdampft. Der zweite Teilstrom wird in einem zweiten, weiteren Wärmetauscher unter Verwendung von Wärme, die durch teilweise Kondensation des entspannten Arbeitsmittelstromes erzeugt wird, teilweise verdampft.

Die teilweise verdampften ersten und zweiten Teilströme werden anschließend durch einen Mischer vereinigt und ein teilweise verdampfter Arbeitsmittelstrom gebildet. Anschließend wird in einem dritten, weiteren Wärmetauscher durch Übertragung von Wärme von der Wärmequelle an den teilweise verdampfte Arbeitsmittelstrom ein gasförmiger Arbeitsmittelstrom erzeugt.

Der gasförmige Arbeitsmittelstrom wird anschließend in einer Turbine entspannt und seine Energie zur Erzeugung von Strom verwendet. Der entspannte Arbeitsmittelstrom wird danach in dem bereits erwähnten zweiten, weiteren Wärmetauscher und dem Vorerwärmungs-Wärmetauscher teilkondensiert und abschließend in einem Kondensator durch vollständige Kondensation das eingangs erwähnte flüssige Arbeitsmittel erzeugt und somit der Kreislauf geschlossen.

Die EP 0 472 020 offenbart ein Verfahren und eine Vorrichtung zur Ausführung eines thermodynamischen Kreisprozesses mit einem Ammoniak-Wasser-Gemisch als Arbeitsmittel, bei dem ein flüssiger Arbeitsmittelstrom auf einen erhöhten Druck gepumpt und anschließend in einen ersten Teilstrom und einen zweiten Teilstrom aufgeteilt wird, wobei der erste Teilstrom und der flüssige Arbeitsmittelstrom im Wesentlichen die gleiche Temperatur aufweisen. Die beiden Teilströme werden teilweise verdampft und anschließend zu einem teilweise verdampften Arbeitsmittelstrom zusammengeführt. Bei dem teilweise verdampften Arbeitsmittelstrom wird anschließend die flüssige Phase von der gasförmigen Phase getrennt. Durch Wärmeübertragung von der flüssigen Phase zu dem ersten Teilstrom wird der erste Teilstrom teilweise verdampft und die flüssige Phase abgekühlt. Die gasförmige Phase wird unter Verwendung von Wärme einer externen Niedertemperaturwärmequelle vollständig verdampft. Das vollständig verdampfte Arbeitsmittel wird entspannt, seine Energie in eine nutzbare Form umgewandelt und ein entspannter Arbeitsmittelstrom erzeugt. Durch Wärmeübertragung von dem entspannten Arbeitsmittelstrom an den zweiten Teilstrom wird der zweite Teilstrom teilweise verdampft und der entspannte Arbeitsmittelstrom teilweise kondensiert. Dem teilweise kondensierten Arbeitsmittelstrom wird anschließend die abgekühlte flüssige Phase des teilweise verdampften Arbeitsmittelstromes zugeführt und der dadurch entstehende Arbeitsmittelstrom anschließend vollständig kondensiert.

Es ist Aufgabe der vorliegenden Erfindung, ein Verfahren und eine Vorrichtung zur Ausführung eines thermodynamischen Kreisprozesses zu schaffen, welche im Vergleich zu dem genannten Stand der Technik bei gleicher Wärmequelle einen höhere Ausbeute an mechanischer und/oder elektrischer Energie ohne wesentliche Erhöhung der Anlagenkosten ermöglichen.

Die Lösung der auf das Verfahren gerichteten Aufgabe gelingt erfindungsgemäß durch ein Verfahren gemäß Patentanspruch 1. Vorteilhafte Ausgestaltungen des Verfahrens sind jeweils Gegenstand der Unteransprüche 2 bis 3. Die Lösung der auf die Vorrichtung gerichteten Aufgabe gelingt erfindungsgemäß durch eine Vorrichtung gemäß Patentanspruch 4. Vorteilhafte Ausgestaltungen der Vorrichtung sind jeweils Gegenstand der Unteransprüche 5 bis 6.

Die Erfindung geht von der Überlegung aus, dass die Wärme der Wärmequelle umso besser ausgenutzt werden kann, je niedriger die Temperatur des Arbeitsmittels vor dem teilweisen Verdampfen des ersten Teilstroms ist. Wenn der erste Teilstrom im wesentlichen die gleiche (niedrige) Temperatur wie der flüssige Arbeitsmittelstrom aufweist, kann der Wärmequelle somit mehr Wärme entnommen und zur Erzeugung von mechanischer und/oder elektrischer Energie genutzt werden als wenn der flüssige Arbeitsmittelstrom bereits vorerwärmt wurde. Unter "im wesentlich gleicher Temperatur" wird im Rahmen der Erfindung verstanden, dass die Temperaturdifferenz nur wenige Kelvin, z.B. aufgrund von leichter Abkühlung des druckbeaufschlagten flüssigen Arbeitsmittels vor Bildung des ersten Teilstromes oder aufgrund des Pumpens des flüssigen Arbeitsmittelsstromes auf einen erhöhten Druck, beträgt.

Es ist somit eine vergleichsweise bessere Ausnutzung der Wärme der Wärmequelle möglich als im Stand der Technik, bei dem der erste Teilstrom aufgrund der Vorerwärmung des druckbeaufschlagten, flüssigen Arbeitsmittelstromes bis auf Siedetemperatur mittels des Vorerwärmungs-Wärmetauschers eine höhere Temperatur aufweist als der flüssige Arbeitsmittelstrom.

Die Erfindung ermöglicht es, durch entsprechende Dimensionierung des Kreislaufes, insbesondere der Heizflächen der Wärmetauscher, den für die Erzeugung der mechanischen oder elektrischen Energie wesentlichen Massestrom des Arbeitsmittels bei ansonsten im Vergleich zum Stand der Technik im wesentlichen gleichbleibendem Druck, Temperatur und Enthalpie des gasförmigen Arbeitsmittelstromes sowie des flüssigen Arbeitsmittelstromes zu erhöhen.

Der Energiegewinn durch die bessere Ausnutzung der Wärme der Wärmequelle ist hierbei größer als die Verluste aufgrund der Nicht-Ausnutzung der Energie des entspannten Arbeitsmittelstromes zur Vorerwärmung des druckbeaufschlagten flüssigen Arbeitsmittelstromes mit Hilfe eines Vorerwärmungs-Wärmetauschers. Ein erhöhter Heizflächenbedarf hat zwar einen erhöhten Investitionsbedarf zur Folge, diese erhöhten Kosten können zu einem Großteil aber durch den Wegfall des Vorerwärmungs-Wärmetauschers und die dadurch vereinfachte Rohrleitungsführung kompensiert werden, so dass die Anlagenkosten im wesentlichen gleich bleiben.

Der erste und der zweite Wärmetauscher sind hierbei so dimensioniert, dass der erste und der zweite teilweise verdampfte Teilstrom in etwa gleiche Temperatur und gleichen Dampfgehalt aufweisen.

Erfindungsgemäß wird als Arbeitsmittel ein Ammoniak-Wasser-Gemisch verwendet. Augrund der nicht-isothermen Verdampfung und Kondensation eines solchen Gemisches kann ein besonders hoher Wirkungsgrad des Kreislaufes erzielt werden.

Eine besonders umweltfreundliche Energiegewinnung ist durch die Verwendung einer geothermischen Flüssigkeit, insbesondere Thermalwasser, aus einer Geothermalquelle als Wärmequelle möglich. Als Wärmequelle können aber auch Abgase (Rauchgase) von Gas- und/oder Dampfturbinenanlagen oder die in industriellen Produktionsprozessen (z.B. bei der Stahlproduktion) erzeugte Wärme verwendet werden.

Ein hoher Wirkungsgrad des Kreislaufes kann hierbei dadurch erzielt werden, dass die Wärmequelle eine Temperatur von 100°C bis 200 °C, insbesondere 140 °C bis 200 °C aufweist.

Die Erfindung sowie weitere vorteilhafte Ausgestaltungen der Erfindung gemäß den Merkmalen der Unteransprüche werden im folgenden anhand von Ausführungsbeispielen in den Figuren näher erläutert. Darin zeigen:
- FIG 1: eine Schaltung einer erfindungsgemäßen Vorrichtung zur Ausführung eines thermodynamischen Kreisprozesses in vereinfachter, schematischer Darstellung,
- FIG 2: eine Kreislaufrechnung für eine Vorrichtung gemäß Figur 1,
- FIG 3: eine Schaltung einer aus dem Stand der Technik bekannten Vorrichtung zur Ausführung eines thermodynamischen Kreisprozesses in vereinfachter, schematischer Darstellung,
- FIG 4: eine Kreislaufrechnung für eine Vorrichtung gemäß Figur 3.

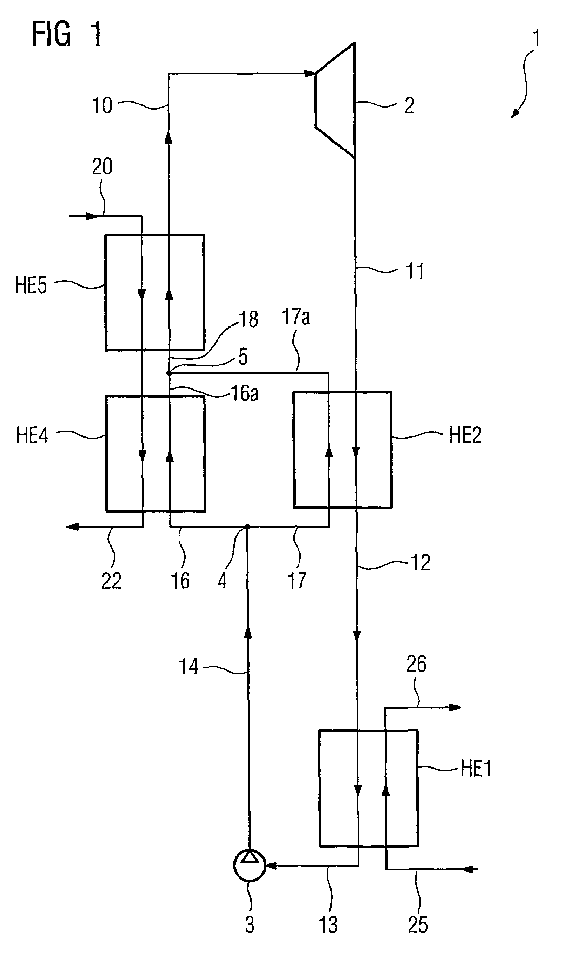

Die in Figur 1 gezeigte Vorrichtung 1 zur Ausführung eines thermodynamischen Kreisprozesses weist einen Wärmetauscher HE 5 auf, der primärseitig von heißem Thermalwasser 20 einer nicht näher dargestellten Geothermalquelle durchflossen wird und sekundärseitig zum einen mit einem Mischer 5 und zum anderen mit einer Turbine 2 verbunden ist. Die Turbine 2 ist ausgangsseitig mit der Sekundärseite eines Wärmetauscher HE 2 verbunden, welcher wiederum mit der Primärseite eines Kondensators HE1 verbunden ist. Der Kondensator HE1 ist an seinem primärseitigen Ausgang, ggfs. über einen Kondensattank, über eine Pumpe 3 mit einem Teiler 4 verbunden. Der Teiler 4 ist zum einen über die Primärseite des Wärmetauschers HE 2 und zum anderen über die Sekundärseite eines Wärmetauschers HE 4 mit dem Mischer 5 verbunden. Die Wärmetauscher HE 5 und HE 4 sind primärseitig für die Durchleitung von heißen Thermalwasser 20 miteinander verbunden, wobei das Thermalwasser zuerst durch den Wärmetauscher HE5 und danach durch den Wärmetauscher HE 4 fließt.

Als Arbeitsmittel wird in der Vorrichtung 1 ein Zweistoff-Gemisch aus Wasser und Ammoniak verwendet, welches somit eine nicht isotherme Verdampfung und Kondensation aufweist. Das Arbeitsmittel liegt nach dem Kondensator HE1 in einem flüssigen Zustand als flüssiger Arbeitsmittelstrom 13 vor. Mit Hilfe der Pumpe 3 wird der flüssige Arbeitsmittelstrom 13 auf einen erhöhten Druck gepumpt und ein druckbeaufschlagter, flüssiger Arbeitsmitelstrom 14 erzeugt, der durch den Teiler 4 in einen ersten Teilstrom 16 und einen zweiten Teilstrom 17 aufgeteilt wird.

Der erste Teilstrom 16 weist im wesentlichen die gleiche Temperatur wie der flüssige Arbeitsmittelstrom 13 auf. Der erste Teilstrom 16 wird sekundärseitig von dem Wärmetauscher HE4 aufgenommen und unter Verwendung von Wärme, die durch Abkühlung des bereits in dem Wärmetauscher HE5 abgekühlten Thermalwasserstromes 20 erzeugt wird, teilweise verdampft und ein teilweise verdampfter erster Teilstrom 16a erzeugt. Der zweite Teilstrom 17 wird primärseitig von dem Wärmetauscher HE 2 aufgenommen und unter Verwendung von Wärme, die durch teilweise Kondensation eines sekundärseitig aufgenommenen entspannten Arbeitsmittelstromes 11 erzeugt wird, teilweise verdampft und ein teilweise verdampfter zweiter Teilstrom 17a erzeugt. Die teilweise verdampften ersten und zweiten Teilströme 16a, 17a werden anschließend in dem Mischer 5 zu einem teilweise verdampften Arbeitsmittelstrom 18 vereinigt. Die Wärmetauscher HE2 und HE4 sind hierbei so dimensioniert, dass der erste und der zweite teilweise verdampfte Teilstrom 16a bzw. 17a in etwa gleiche Temperatur und gleichen Dampfgehalt aufweisen.

Der teilweise verdampfte Arbeitsmittelstrom 18 wird anschließend sekundärseitig von dem Wärmetauscher HE 5 aufgenommen und durch Abkühlung des primärseitig aufgenommenen heißen Thermalwasserstromes 20 ein vollständig verdampfter, gegebenenfalls teilweise überhitzter, gasförmiger Arbeitsmittelstrom 10 erzeugt. Der gasförmige Arbeitsmittelstrom 10 wird anschließende in der Turbine 2 entspannt, seine Energie in eine nutzbare Form, z.B. über einen nicht dargestellten Generator in Strom, umgewandelt und der entspannte Arbeitsmittelstrom 11 erzeugt. Der entspannte Arbeitsmittelstrom 11 wird in dem Wärmetauscher HE 2 teilkondensiert und ein teilkondensierter, entspannter Arbeitsmittelstrom 12 erzeugt. Der teilkondensierte, entspannte Arbeitsmittelstrom 12 wird anschließend in dem Wärmetauscher (Kondensator) HE1 mit Hilfe eines zulaufenden Kühlwasserstromes 25 kondensiert und der flüssige Arbeitsmittelstrom 13 erzeugt. Die durch die Kondesnation des entspanntes Arbeitsmittelstrom 12 an den Kühlewasserstrom 25 übertragene Wärme wird durch den ablaufenden Kühlwasserstrom 26 abgeführt.

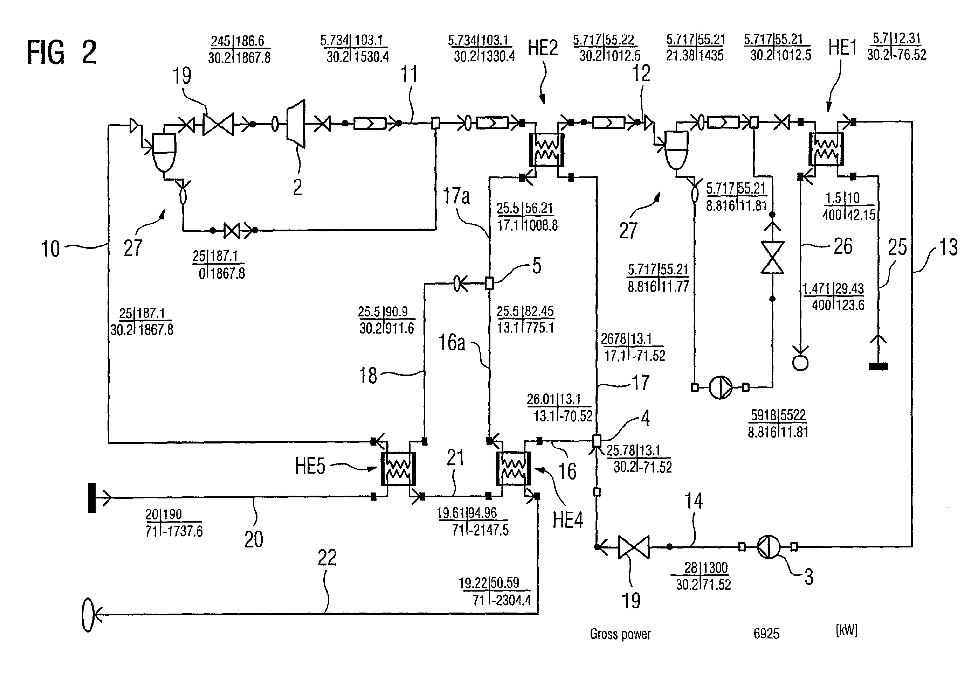

Die Figur 2 zeigt eine Kreislaufberechnung für eine Vorrichtung zur Ausführung des thermodynamischen Kreisprozesses, die im wesentlichen der in Figur 1 dargestellten Vorrichtung 1 entspricht und zusätzlich nur noch um einige Ventile 19 und Separatorschaltungen 27 ergänzt wurde. Als Ausgangsbedingungen für die Berechnungen wurden gewählt:

| | Temperatur | Massestrom |
|---|---|---|
| Thermalwasserstrom 20 | 190 °C | 71 kg/s |
| Kühlwasserstrom 25 | 10 °C | ca. 400 kg/s |

Die Ammoniakkonzentration im Wasser beträgt 81%.

Die Tabelle 1 zeigt für einige ausgewählte Ströme des Kreislaufes das Ergebnis der Kreislaufberechnung, wobei die Leistungen der Wärmetauscher gemäß Tabelle 2 gewählt sind.

**Tabelle 1:**

| Strom | Temperatur (^{°}C) | Enthalpie (kJ/kg) | Massenstrom (kg/s) | Druck (bar) |
|---|---|---|---|---|
| 10 | 187,1 | 1867,8 | 30,2 | 25 |
| 13 | 12,3 | -76,52 | 30,2 | 5,7 |
| 16 | 13,1 | -70,52 | 13,1 | 26,01 |
| 20 | 190 | -1737,6 | 71 | 20 |
| 22 | 50,59 | -2304,1 | 71 | 19,22 |

**Tabelle 2:**

| Wärmetauscher | Leistung |
|---|---|
| HE 1 (Kondensator) | 32,51 kW |
| HE 2 | 18,47 kW |
| HE 4 | 11,02 |
| HE 5 | 28,87 kW |
| Summe | 90, 87 kW |

Die Temperatur des ersten Teilstroms 16 vor Eintritt in den Wärmetauscher HE 4 beträgt 13,1 °C und damit in etwa die gleiche Temperatur wie der druckbeaufschlagte flüssige Arbeitsmittelstrom 14 bzw. der flüssige Arbeitsmittelstrom 13 (12,3 °C). Die unter diesen Bedingungen mit Hilfe der Turbine 2 erzeugbare elektrische Leistung beträgt 6925 kW.

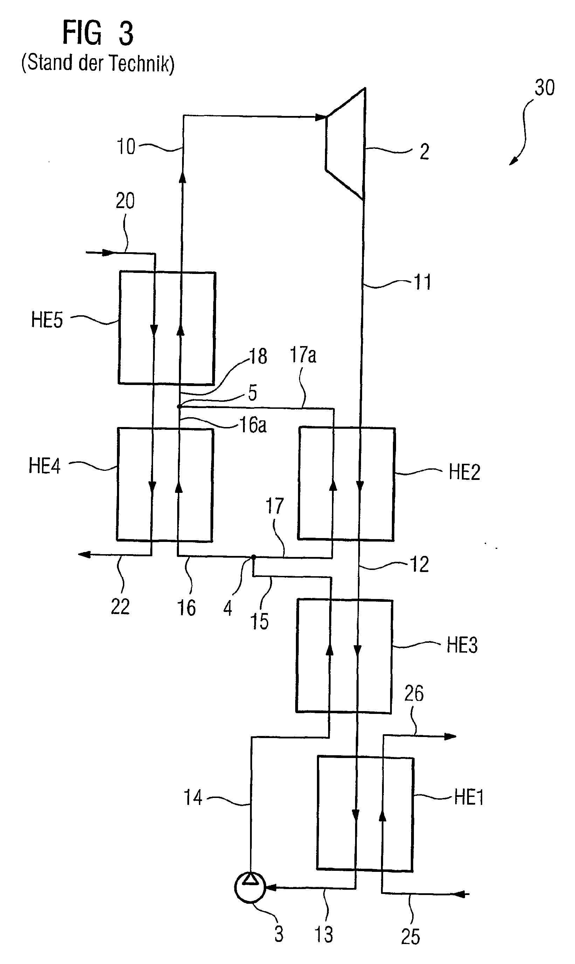

Die Figur 3 zeigt demgegenüber die Schaltung einer im Stand der Technik als KCS 11 (Kalina Cycle System 11) bekannten Vorrichtung 30 zur Ausführung eines thermodynamischen Kreisprozesses. Zum besseren Vergleich der bekannten Vorrichtung 30 mit der in FIG 1 dargestellten erfindungsgemäßen Vorrichtung sind einander entsprechende Elemente bzw. Arbeitsmittelströme mit gleichen Bezugszeichen versehen. Die Vorrichtung 30 unterscheidet sich von der in FIG 1 gezeigten erfindungsgemäßen Vorrichtung durch einen zusätzlichen, primärseitig zwischen die Pumpe 3 und den Teiler 4 und sekundärseitig zwischen den Wärmetauscher HE2 und den Kondensator HE1 geschalteten (rekuperativen) Vorerwärmung-Wärmetauscher HE3. Mit Hilfe des Wärmetauscher HE3 wird der druckbeaufschlagte, flüssige Arbeitsmittelstrom 14 durch weitere Teilkondensation des bereits teilkondensierten, entspannten Arbeitsmittelstromes 12 bis zum Siedepunkt erwärmt. Der erste Teilstrom 16 weist somit Sattwassertemperatur auf und wird mit dieser Temperatur dem Wärmetauscher HE4 zugeführt. Aufgrund dieser gegenüber dem flüssigen Arbeitsmittelstrom 13 wesentlich erhöhten Temperatur kann in den Wärmetauschern HE4 und HE5 die Wärme des Thermalwasserstromes 20 weniger ausgenutzt werden.

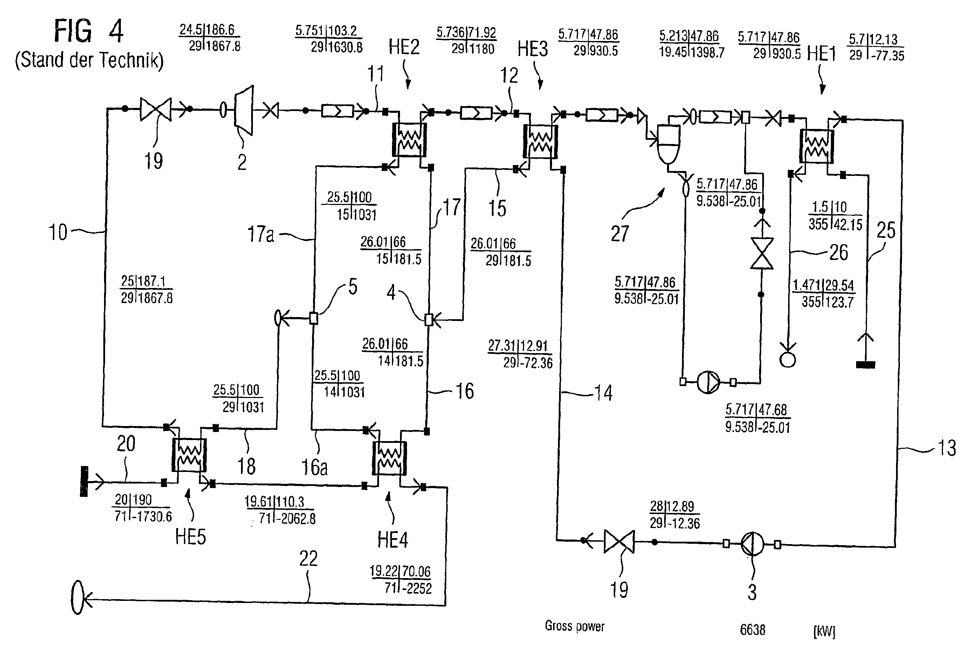

Die Figur 4 zeigt eine Kreislaufrechnung für eine aus dem Stand der Technik bekannte Vorrichtung, die im wesentlichen der in Figur 3 dargestellten Vorrichtung 30 entspricht und zusätzlich nur noch um einige Ventile 19 und eine Separatorschaltung 27 ergänzt wurde. Als Ausgangsbedingungen für die Berechnungen wurden die gleichen Ausgangsbedingungen wie bei der Kreislaufrechnung gemäß Figur 2 verwendet wurden.

Die Tabelle 3 zeigt für einige ausgewählte Ströme des Kreislaufes das Ergebnis der Kreislaufberechnung, wobei die Leistungen der Wärmetauscher gemäß Tabelle 4 gewählt sind.

**Tabelle 3:**

| Strom | Temperatur (°C) | Enthalpie (kJ/kg) | Massenstrom (kg/s) | Druck (bar) |
|---|---|---|---|---|
| 10 | 187,1 | 1867,8 | 29 | 25 |
| 13 | 12,13 | -77,35 | 29 | 5,7 |
| 16 | 66 | 181,5 | 14 | 26,01 |
| 20 | 190 | 1730,6 | 71 | 20 |
| 22 | 70,06 | -2252 | 71 | 19,22 |

**Tabelle 4:**

| Wärmetauscher | Leistung |
|---|---|
| HE 1 (Kondensator) | 28,94 kW |
| HE 2 | 12,74 kW |
| HE 3 | 7,36 kW |
| HE 4 | 11,89 kW |
| HE 5 | 24,26 kW |

Die hierbei erzeugbare elektrische Leistung beträgt nur 6638 kW. Die erzielbare elektrische Leistung ist somit im Fall des erfindungsgemäßen Kreislaufes gemäß FIG 1 und 2 um 4,3 % höher als im Fall des aus dem Stand der Technik bekannten Kreislaufes. Dieser Mehrgewinn ist durch die höhere Wärmeentnahme aus dem Thermalwasser (die Temperatur des abfließendes Themalwasser 22 beträgt nur 50,59°C im Fall des Kreislaufes gemäß FIG 2 im Vergleich zu 70,06°C im Fall des Kreislaufes gemäß FIG 4) und des dadurch erzielbaren höheren Massestromes des Arbeitsmittels vor Eintritt in die Turbine 2 (30,2 kg/s im Fall des Kreislaufes gemäß FIG 2 und 29 kg/s im Fall des Kreislaufes gemäß FIG 4).

Der aufgrund der erhöhten Wärmetauscherleistung auch erhöhte Heizflächenbedarf von 6,25 % hat einen erhöhten Investitionsbedarf zur Folge. Diese erhöhten Kosten können aber zu einem Großteil durch die vereinfachte Rohrleitungsführung auf der Abdampfseite der Turbine 2 und durch den Wegfall des Wärmetauschers HE3 kompensiert werden, so daß die Anlagenkosten insgesamt im wesentlichen gleich bleiben.

Die Erfindung wurde vorstehend anhand bevorzugter Ausführungsbeispiele beschrieben, kann generell aber nicht als auf diese Ausführungsbeispiele beschränkt angesehen werden. Es besteht vielmehr die Möglichkeit einer Vielzahl von Variationen und Modifikationen der Erfindung bzw. dieser Ausführungsbeispiele. Zum Beispiel kann die Anzahl der Wärmetauscher erhöht werden, es können - wie auch in dem Schaltungsbeispiel gem. FIG 2 geschehen - zusätzlich Ventile und Separatoren in die Schaltung geschaltet werden. Weiterhin kann z.B. der gasförmige Arbeitsmittelstrom 10 in mehr als einem Schritt, z.B. über zwei hintereinander geschaltete Turbinen, entspannt werden.

## Patentansprüche

1. Verfahren zur Ausführung eines thermodynamischen Kreisprozesses, das zumindest die folgenden Schritte aufweist:
- Pumpen eines flüssigen Arbeitsmittelstromes (13) auf einen erhöhten Druck;
- Aufteilen des druckbeaufschlagten, flüssigen Arbeitsmittelstromes (14) in einen ersten Teilstrom (16) und einen zweiten Teilstrom (17), wobei der erste Teilstrom und der flüssige Arbeitsmittelstrom (13) im Wesentlichen die gleiche Temperatur aufweisen;
- teilweises Verdampfen des ersten Teilstroms (16) unter Verwendung von Wärme, die durch Abkühlung einer Wärmequelle (20 bzw. 21) erzeugt wird;
- teilweises Verdampfen des zweiten Teilstroms (17) unter Verwendung von Wärme, die durch teilweise Kondensation eines entspannten Arbeitsmittelsstromes (11) erzeugt wird;
- Vereinigen des teilweise verdampften ersten und zweiten Teilstroms (16a bzw. 17a) zu einem teilweise verdampften Arbeitsmittelstrom (18);
- Erzeugen eines gasförmigen Arbeitsmittelstromes (10) durch vollständiges Verdampfen, ggf. teilweises Überhitzen, des teilweise verdampften Arbeitsmittelstromes (18) unter Verwendung von Wärme, die aus der Abkühlung der Wärmequelle (20) erzeugt wird,
- Entspannen des gasförmigen Arbeitsmittelstromes (10), Umwandeln seiner Energie in eine nutzbare Form und Erzeugen des entspannten Arbeitsmittelstromes (11); und
- vollständige Kondensation des teilweise kondensierten, entspannten Arbeitsmittelstromes (12) zur Bildung des flüssigen Arbeitsmittelstromes (13),
wobei der erste und der zweite teilweise verdampfte Teilstrom (16a bzw. 17a) in etwa gleiche Temperatur und gleichen Dampfgehalt aufweisen und wobei als Arbeitsmittel ein Ammoniak-Wasser-Gemisch verwendet wird.

2. Verfahren nach Anspruch 1, wobei als Wärmequelle (20) eine geothermische Flüssigkeit, insbesondere Thermalwasser, verwendet wird.

3. Verfahren nach einem der vorhergehenden Ansprüche, wobei die Wärmequelle (20) eine Temperatur von 100 °C bis 200 °C, insbesondere 140 °C bis 200 °C aufweist.

4. Vorrichtung zur Ausführung eines thermodynamischen Kreisprozesses, insbesondere zur Durchführung des Verfahrens nach einem der Ansprüche 1 bis 3, mit zumindest
- einer Pumpe (3) zum Pumpen eines flüssigen Arbeitsmittelstromes (13) auf einen erhöhten Druck;
- einen Teiler (4) zum Aufteilen des druckbeaufschlagten flüssigen Arbeitsmittelstromes (14) in einen ersten Teilstrom (16) und einen zweiten Teilstrom (17), wobei der erste Teilstrom (16) und der flüssige Arbeitsmittelstrom (13) im Wesentlichen die gleiche Temperatur aufweisen;
- einen ersten Wärmetauscher (HE 4) zur Aufnahme des ersten Teilstromes (16) und zur Erzeugung und Abgabe eines teilweise verdampften ersten Teilstroms (16a) durch Abkühlung einer Wärmequelle (20) ;
- einen zweiten Wärmetauscher (HE 2) zur Aufnahme eines entspannten Arbeitsmittelstromes (11) und des zweiten Teilstroms (17), zur Abkühlung des entspannten Arbeitsmittelstromes (11) durch Wärmeübertragung zu dem zweiten Teilstrom (17) und zur Abgabe eines teilweise verdampften zweiten Teilstroms (17a) und eines teilweise kondensierten, entspannten Arbeitsmittelstromes (12);
- einen Mischer (5) zum Vereinigen des teilweise verdampften ersten Teilstromes (16a) und des teilweise verdampften zweiten Teilstromes (17a) zu dem teilweise verdampften Arbeitsmittelstrom (18);
- einen dritten Wärmetauscher (HE 5) zur Aufnahme des teilweise verdampften Arbeitsmittelstromes (18) und zur Erzeugung und Abgabe eines gasförmigen, ggf. überhitzten, Arbeitsmittelstromes (10) durch Abkühlung der Wärmequelle (20),
- eine Einrichtung (2), insbesondere Turbine, zum Entspannen des gasförmigen Arbeitsmittelstromes (10), zum Umwandeln seiner Energie in eine nutzbare Form und zur Abgabe des entspannten Arbeitsmittelstromes (11); und
- einen vierten Wärmetauscher (Kondensator) (HE 1) zur Aufnahme und vollständigen Kondensation des teilweise kondensierten, entspannten Arbeitsmittelstromes (12) und zur Abgabe des flüssigen Arbeitsmittelstromes (13),
wobei der erste und der zweite Wärmetauscher (HE 2 bzw. HE 4) so dimensioniert sind, dass der erste und der zweite teilweise verdampfte Teilstrom (16a bzw. 17a) in etwa die gleiche Temperatur und Dampfgehalt aufweisen und wobei das Arbeitsmittel ein Ammoniak-Wasser-Gemisch ist.

5. Vorrichtung nach Anspruch 4, wobei als Wärmequelle (20) eine geothermische Flüssigkeit, insbesondere Thermalwasser, vorgesehen ist.

6. Vorrichtung nach einem der Ansprüche 4 bis 5, wobei die Wärmequelle (20) eine Temperatur von 100 °C bis 200 °C, insbesondere 140 °C bis 200 °C aufweist.

## Claims

1. Method for carrying out a thermodynamic cycle process which features at least the following steps:
- pumping a liquid working substance stream (13) at an increased pressure;
- separating the pressurised liquid working substance stream (14) into a first partial stream (16) and a second partial stream (17) with the first partial stream and the liquid working substance stream (13) essentially having the same temperature;
- partial evaporation of the first partial stream (16) using heat generated by cooling down of a heat source (20 or 21);
- partial evaporation of the second partial stream (17) using heat generated by partial condensation of an expanded working substance stream (11);
- combination of the partially evaporated first and second partial stream (16a or 17a) into a partially evaporated working substance stream (18);
- creation of a gaseous working substance stream (10) by complete evaporation, if necessary partial overheating, of the partially evaporated working substance stream (18) using heat which is generated from the cooling down of the heat source (20),
- expansion of the gaseous working substance stream (10), conversion of its energy into a usable form and creation of the expanded working substance stream (11); and
- complete condensation of the partially condensed, expanded working substance stream (12) to form the liquid working substance stream (13),
with the first and the second partially evaporated partial stream (16a or 17a) having about the same temperature and the same steam content, and with an ammonia-water mixture being used as a working substance.

2. Method in accordance with claim 1, with a geothermal liquid, especially thermal water, being used as the heat source (20).

3. Method in accordance with one of the previous claims, with the heat source (20) having a temperature of 100°C to 200°C, especially 140°C to 200°C.

4. Device for carrying out a thermodynamic cycle process, especially for carrying out the method in accordance with one of the claims 1 to 3, with at least
- a pump (3) for pumping a liquid working substance stream (13) at an increased pressure;
- a separator (4) for separating the pressurised liquid working substance stream (14) into a first partial stream (16) and a second partial stream (17), with the first partial stream and the liquid working substance stream (13) essentially having the same temperature;
- a first heat exchanger (HE4) for accepting the first partial stream (16) and for generating and emitting a partially evaporated first partial stream (16a) by cooling down a heat source (20);
- a second heat exchanger (HE2) for accepting an expanded working substance stream (11) and the second partial stream (17), for cooling down the expanded working substance stream (11) by transferring heat to the second partial stream (17) and for emitting a partially evaporated second partial stream (17a) and of a partially condensed, expanded working substance stream (12);
- a mixer (5) for combining the partially evaporated first partial stream (16a) and the partially evaporated second partial stream (17a) into a partially evaporated working substance stream (18);
- a third heat exchanger (HE5) for accepting the partially evaporated working substance stream (18) and for generating and emitting a gaseous, if nec. overheated working substance stream (10) through cooling down the heat source (20)
- a device (2), especially a turbine, for expanding the gaseous working substance stream (10), for converting its energy into a usable form and for emitting the expanded working substance stream (11); and
- a fourth heat exchanger (condenser) (HE1) for accepting and complete condensation of the partially condensed, expanded working substance stream (12) and for emitting the liquid working substance stream (13).
with the first and the second heat exchanger (HE2 or HE4) being dimensioned such that the first and the second partially evaporated partial stream (16a or 17a) have about the same temperature and steam content and with the working substance being an ammonia-water mixture.

5. Device in accordance with claim 4, with a geothermal liquid, especially thermal water, being provided as a heat source (20).

6. Device in accordance with one of the claims 4 to 5, with the heat source (20) having a temperature of 100°C to 200°C, especially 140°C to 200°C.

## Revendications

1. Procédé pour effectuer un cycle thermodynamique, qui a au moins les stades suivants :
- on pompe un courant ( 13 ) de fluide de travail liquide jusqu'à une pression plus élevée ;
- on répartit le courant ( 14 ) de fluide de travail liquide soumis à la pression en un premier sous-courant ( 16 ) et en un deuxième sous-courant ( 17 ), le premier sous-courant et le courant ( 13 ) de fluide de travail liquide ayant sensiblement la même température ;
- on évapore partiellement le premier sous-courant ( 16 ) en utilisant de la chaleur produite en refroidissant une source ( 20 ) et ( 21 ) de chaleur ;
- on évapore partiellement le deuxième sous-courant ( 17 ) en utilisant de la chaleur produite par condensation partielle d'un courant ( 11 ) de fluide de travail détendu ;
- on réunit les premier et deuxième sous-courants ( 16a ) et ( 17a ) évaporés partiellement en un courant ( 18 ) de fluide de travail évaporé partiellement ;
- on produit un courant ( 10 ) de fluide de travail gazeux en évaporant complètement, le cas échéant en surchauffant partiellement, le courant ( 18 ) de fluide de travail évaporé partiellement, en utilisant de la chaleur produite par le refroidissement de la source ( 20 ) de chaleur ;
- on détend le courant ( 10 ) de fluide de travail gazeux, on transforme son énergie en une forme utilisable et on produit le courant ( 11 ) de fluide de travail détendu ; et
- on condense complètement le courant ( 12 ) de fluide de travail condensé partiellement et détendu pour former le courant ( 13 ) de fluide de travail liquide,
dans lequel le premier et le deuxième sous-courant ( 16a, 17a ) évaporés partiellement ont à peu près la même température et la même teneur en vapeur et on utilise comme fluide de travail un mélange d'ammoniac et d'eau.

2. Revendication 1, dans lequel on utilise comme source ( 20 ) de chaleur un liquide géothermique, notamment de l'eau thermale.

3. Procédé suivant l'une des revendications précédentes, dans lequel la source ( 20 ) de chaleur a une température de 100°C à 200°C, notamment de 140°C à 200°C.

4. Dispositif pour réaliser un cycle thermodynamique, notamment pour réaliser le procédé suivant l'une des revendications 1 à 3, comprenant au moins
- une pompe ( 3 ) pour amener un courant ( 13 ) de fluide de travail liquide à une pression élevée ;
- un diviseur ( 4 ) pour diviser le courant ( 14 ) de fluide de travail liquide soumis à la pression en un premier sous-courant ( 16 ) et en un deuxième sous-courant ( 17 ), le premier sous-courant ( 16 ) et le courant ( 13 ) de fluide de travail liquide ayant sensiblement la même température ;
- un premier échangeur de chaleur ( HE 4 ) pour la réception du premier sous-courant ( 16 ) et pour la production et la fourniture d'un premier sous-courant ( 16a ) évaporé partiellement par refroidissement d'une source ( 20 ) de chaleur ;
- un deuxième échangeur de chaleur ( HE 2 ) pour la réception d'un courant ( 11 ) de fluide de travail détendu et du deuxième sous-courant ( 17 ) pour le refroidissement du courant ( 11 ) de fluide de travail détendu par transmission de chaleur au deuxième sous-courant ( 17 ) et pour la fourniture d'un deuxième sous-courant ( 17 ) évaporé partiellement et d'un courant ( 12 ) de fluide de travail condensé partiellement et détendu ;
- un mélangeur ( 5 ) pour réunir le premier sous-courant ( 16a ) évaporé partiellement et le deuxième sous-courant ( 17a ) évaporé partiellement en le courant ( 18 ) de fluide de travail évaporé partiellement ;
- un troisième échangeur de chaleur ( HE 5 ) pour la réception du courant ( 18 ) de fluide de travail évaporé et pour la production et la fourniture d'un courant ( 10 ) de fluide de travail gazeux, éventuellement surchauffé, par refroidissement de la source ( 20 ) de chaleur ;
- un dispositif ( 2 ), notamment une turbine, pour détendre le courant ( 10 ) de fluide de travail gazeux, pour transformer son énergie en une forme utilisable et pour la fourniture du courant ( 11 ) de fluide de travail détendu ; et
- un quatrième échangeur de chaleur ( condenseur ) ( HE 1 ) pour la réception et la condensation complète du courant ( 12 ) de fluide de travail condensé partiellement et détendu et pour la fourniture du courant ( 11 ) de fluide de travail liquide,
dans lequel le premier et le deuxième échangeurs de chaleur ( HE 2 et HE 4 ) ont des dimensions telles que le premier et le deuxième sous-courants ( 16a et 17a ) évaporés partiellement ont à peu près la même température et la même teneur en vapeur et dans lequel le fluide de travail est un mélange d'ammoniac et d'eau.

5. Dispositif suivant la revendication 4, dans lequel on prévoit, comme source ( 20 ) de chaleur, un liquide géothermique, notamment de l'eau thermale.

6. Dispositif suivant l'une des revendications 4 à 5, dans lequel la source ( 20 ) de chaleur a une température de 100°C à 200°C, notamment de 140°C à 200°C.
